# EUROPÄISCHE PATENTSCHRIFT

(11) **EP 3 835 587 B1**
(45) Veröffentlichungstag und Bekanntmachung des Hinweises auf die Patenterteilung: **09.02.2022**
(21) Anmeldenummer: 19020687.0
(22) Anmeldetag: 10.12.2019
(51) Int. Cl.: F04D 13/06, F04D 29/00, H02K 11/00, H02K 11/30

(54) **STEUERUNGSELEKTRONIK FÜR EINE KREISELPUMPE MIT WENIGSTENS EINEM OPTISCHEN ANZEIGEELEMENT**
ELECTRONIC CONTROL SYSTEM FOR A CENTRIFUGAL PUMP COMPRISING AT LEAST ONE OPTICAL DISPLAY ELEMENT
ÉLECTRONIQUE DE COMMANDE POUR UNE POMPE CENTRIFUGE DOTÉE D'AU MOINS UN ÉLÉMENT D'AFFICHAGE OPTIQUE

(43) Veröffentlichungstag der Anmeldung: 16.06.2021
(73) Patentinhaber: WILO SE, 44263 Dortmund (DE)
(72) Erfinder: Oettmeier, Martin Dr., 44263 Dortmund (DE); Budy, Dominic, 44263 Dortmund (DE)
(74) Vertreter: Cohausz Hannig Borkowski Wißgott

(56) Entgegenhaltungen:
- EP-A1- 1 321 675
- EP-A1- 2 031 313
- EP-A2- 2 453 559
- US-A1- 2011 147 077
- US-A1- 2013 100 696

## Beschreibung

Die Erfindung betrifft eine Steuerungselektronik für eine elektromotorisch angetriebene Kreiselpumpe, insbesondere eine Spaltrohrpumpe, mit einem Gehäuse, innerhalb dem ein Leuchtelement angeordnet ist, wobei das Gehäuse einen dem Leuchtelement zugeordneten Lichtkanal mit einer Lichtaustrittsöffnung zur Bildung eines optischen Anzeigeelements aufweist, das lateral zum Leuchtelement versetzt ist und emittiertes Licht des Leuchtelements abgibt.

Eine solche Steuerungselektronik ist aus EP 1 321 675 A1 bekannt.

Elektronische Steuerungen technischer Geräte weisen an ihrem Gehäuse häufig Licht emittierende optische Anzeigeelemente in Gestalt einzelner Lichtpunkte auf, um eine Information über einen bestimmten Betriebszustand des gesteuerten Geräts zu vermitteln. Beispielsweise zeigt das Anzeigeelement an, dass sich das Gerät im Betrieb befindet, ein Fehlerzustand vorliegt oder aktuell eine Einstellung vorgenommen wird. Häufig wird auch eine farbliche oder zeitliche Kodierung der Information, z.B. eine Leucht- bzw. Blinksequenz verwendet, um bestimmte Informationen über das emittierte Licht zu übertragen, wie z.B. grünes Licht zur Anzeige eines ordnungsgemäßen Betriebs, rotes Licht zur Anzeige eines Fehlerzustands oder eine Blinksequenz zur Anzeige eines aktiven Programmiermodus. Der Vorteil solcher Anzeigeelemente besteht in ihrer konstruktiven Einfachheit und einfachen Ansteuerbarkeit. Die vermittelte Information ist unmittelbar ablesbar und kann auch bei schlechten Lichtverhältnissen und aus größerer Distanz wahrgenommen werden. Ein Leuchtelement bildet die Lichtquelle für das optische Anzeigeelement. In der Regel dient eine Leuchtdiode (LED - Light Emitting Diode) als Leuchtelement, die es in den unterschiedlichsten Bauformen gibt.

Das Gehäuse der Steuerungselektronik besteht aus Wänden einer bestimmten Dicke, wobei zur Bildung des Anzeigeelements in einer der Wände eine Öffnung ausgebildet ist. Diese Öffnung bildet makroskopisch betrachtet einen Lichtkanal mit einer Längserstreckung, der nach außen hin durch die Lichtaustrittsöffnung offen ist. Dabei ist die Längserstreckung des Lichtkanals stets rechtwinklig zur Ebene, in der die Gehäusewand liegt. In dieser Öffnung bzw. in dem Kanal kann das Leuchtelement einliegen und somit unmittelbar das Anzeigeelement bilden. Dabei kann das Leuchtelement beispielsweise von der Gehäusewand gehalten sein. Dies schafft zwar eine gewisse Flexibilität bezüglich der Anordnung des Anzeigeelements gegenüber den übrigen elektrischen und elektronischen Komponenten der Steuerung, jedoch muss die zur Bestromung des Leuchtelements notwendige elektrische Verbindung über Kabel erfolgen, die einen zusätzlichen Verdrahtungs- und Verlötungsaufwand erfordern. Das Leuchtelement kann alternativ auf einer gedruckten Leiterplatte (PCB - Printed Circuit Board) ortsfest angeordnet sein und sich von der Leiterplatte mit seinem Körper in den Kanal hineinerstrecken. Besitzt das Leuchtelement massive elektrische Anschlüsse in Gestalt von Beinchen, ist die Flexibilität bereits erheblich eingeschränkt. So muss das Anzeigeelement, bzw. der Lichtkanal unmittelbar über der Position des Leuchtelements auf der Leiterplatte sein oder sich, sofern die Beinchen in bestimmter Weise abgewinkelt gebogen werden können, jedenfalls in unmittelbarer Nähe zu dieser Position befinden.

Ist das Leuchtelement in SMD-Technik (Surface Mounted Device) ausgeführt auf der Leiterplatte angeordnet, kann es nicht in dem Kanal einliegen, so dass bereits aufgrund des Abstands der Lichtaustrittsöffnung zur Leiterplatte eine räumliche Trennung des optischen Anzeigeelements und dessen Lichtquelle in Form des Leuchtelements vorliegt. Die Lichtaustrittsöffnung und die Position des Leuchtelements auf der Leiterplatte werden dann häufig relativ zu einander so ausgeführt, dass sie in einer Flucht, d.h. übereinanderliegen. Dies schränkt die Gestaltungsfreiheit für die Anordnung des Anzeigeelements und/ oder des Leuchtelements erheblich ein. In der Praxis ist es jedoch nicht immer möglich, das Leuchtelement auf der Leiterplatte genau dort, bzw. in derjenigen Flucht anzuordnen, wo das Gehäuse aus ästhetischer und/ oder funktionaler Sicht das optische Anzeigeelement aufweisen soll. Vielmehr muss das Leuchtelement oft zum optischen Anzeigeelements lateral versetzt angeordnet werden.

Diese Gestaltungsfreiheit wird durch die Verwendung von speziell geformten Lichtwellenleitern ermöglicht, die in Spritzgusstechnik beispielsweise aus Polycarbonat hergestellt werden. Der Lichtwellenleiter überbrückt den Abstand zwischen Leuchtelement und Anzeigeelement. Er besitzt ein erstes Ende mit einer auf das Leuchtelement gerichteten Lichteintrittsfläche, einen Lichtleitkörper und ein zweites Ende mit einer Lichtaustrittsfläche, wobei das zweite Ende in der Gehäuseöffnung bzw. dem Lichtkanal formschlüssig einliegt. Das Lichtleitelement muss allerdings im Gehäuse gehalten und zusätzlich montiert werden. Seine separate Herstellung und Montage verteuern und verkomplizieren die Produktion der Steuerungselektronik.

Es ist deshalb Aufgabe der vorliegenden Erfindung, eine konstruktiv einfache und preiswert herzustellende Steuerungselektronik mit zumindest einem Leuchtelement und einem lateral hierzu versetzten optischen Anzeigeelement zu schaffen, das das vom Leuchtelement erzeugte Licht nach außen abgibt.

Diese Aufgabe wird durch eine Steuerungselektronik mit den Merkmalen des Anspruchs 1 gelöst. Vorteilhafte Weiterbildungen sind in den Unteransprüchen angegeben und werden nachfolgend erläutert.

Erfindungsgemäß wird vorgeschlagen, dass zwischen der Lichtaustrittsöffnung und dem Leuchtelement ein Freiraum besteht und der Lichtkanal auf das Leuchtelement gerichtet ist. Im Gegensatz zum Stand der Technik wird somit bei der erfindungsgemäßen Lösung auf einen Lichtwellenleiter zwischen Leuchtelement und Lichtaustrittsöffnung verzichtet. Damit dennoch direktes vom Leuchtelement emittiertes Licht durch die Lichtaustrittsöffnung gelangen kann, ist der Lichtkanal zum Leuchtelement orientiert. Diese gerichtete Erstreckung bedeutet infolge des lateralen Versatzes zwischen Leuchtelement und Lichtaustrittsöffnung, dass zumindest ein den Lichtkanal begrenzender Wandabschnitt parallel zu einer Lichtemissionsrichtung des Leuchtelements liegt. Mit anderen Worten ist die Längserstreckung des Lichtkanals gegenüber dem Stand der Technik nicht mehr rechtwinklig zur Ebene, in der die Gehäusewand liegt, sondern winklig hierzu ausgeführt. Trotz des lateralen Versatzes gelangt somit direktes Licht des Leuchtelements in den Lichtkanal und durch die Austrittsöffnung aus dem Gehäuse heraus, was ohne die gerichtete Erstreckung des Lichtkanals aufgrund des lateralen Versatzes nicht der Fall wäre. Somit lässt sich allein durch eine geringfügige, partielle Änderung der Gehäusegestaltung, eine Optimierung der Steuerungselektronik bezüglich des Anzeigeelements in konstruktiver, herstellungstechnischer und kostenmäßiger Hinsicht erreichen.

Vorzugsweise kann das Leuchtelement auf einer Leiterplatte (PCB) angeordnet sein, insbesondere gemeinsam mit weiteren elektrischen und/ oder elektronischen Bauelementen der Steuerungselektronik. Die Leiterplatte kann sich dabei vorzugsweise, jedoch nicht zwingend, parallel zu einer Wand des Gehäuses erstrecken, die das Anzeigeelement aufweist.

Beispielsweise kann das Anzeigeelement in einem ein Gehäuseunterteil abdeckenden Deckel ausgebildet sein. Somit ist auch der Lichtkanal in dem Deckel ausgebildet. Dies ermöglicht eine einfache Montage der Elektronik in dem Gehäuseunterteil, welches anschließend durch den Deckel verschlossen wird.

Der Lichtkanal kann durch eine Abdeckung abgedeckt sein, um das Eindringen von Schmutz zu verhindern, wobei die Abdeckung zumindest im Bereich des Anzeigeelements derart beschaffen ist, dass sie das Licht streut. Sie wirkt insoweit als Streuscheibe. Beispielsweise kann die Abdeckung eine Folie oder Platte sein. Die streuende Wirkung kann erreicht werden, indem zumindest eine Oberfläche der Abdeckung satiniert ist oder die Abdeckung milchig getrübt ist.

Die Querschnittsform des Lichtkanals kann grundsätzlich beliebig sein. Beispielsweise besitzt ein sich durch die Gehäusewandung erstreckender, quer zur Längserstreckung kreiszylindrischer Lichtkanal, eine elliptische Lichtaustrittsöffnung, dessen längere Ellipsenachse sich in die Richtung erstreckt, in die der Lichtkanal gegenüber der konventionellen rechtwinkligen Ausrichtung gekippt ist. Vorzugsweise ist der Lichtkanal quer zu der Richtung, in der er gegenüber der Ebene der Gehäusewand gekippt ist, länglich, um möglichst viel des emittierten Lichts des Leuchtelements einzufangen.

In einer einfachen Ausführungsvariante kann der Lichtkanal wenigstens zwei sich gegenüberliegende Wandabschnitte aufweisen, die jeweils parallel zu einer Lichtemissionsrichtung des Leuchtelements liegen. Die Wandabschnitte bilden räumliche Begrenzungen des Lichtkanals. Im Querschnitts betrachtet, können diese Wandabschnitte parallel zueinander liegen. Vorzugsweise jedoch konvergieren sie in Richtung der Lichtaustrittsöffnung, so dass die Lichteintrittsöffnung des Lichtkanals flächenmäßig größer ist, als die Lichtaustrittsöffnung, um möglichst viel Licht einzufangen.

In einer Ausführungsvariante kann der Lichtkanal wenigstens einen sich parallel zu einer Lichtemissionsrichtung des Leuchtelements erstreckenden Wandabschnitt und einen weiteren Wandabschnitt aufweisen, der sich senkrecht zur Ebene erstreckt, in der die Gehäusewand liegt, insbesondere senkrecht zur Außen- oder Innenseite des Gehäuses. Der weitere Wandabschnitt ist vorzugsweise der am entferntesten zum Leuchtelement liegende Wandabschnitt des Lichtkanals. Er bildet dadurch einen Reflektor, so dass ein Teil des Lichts als einfach reflektierter Lichtstrahl durch die Austrittsöffnung gelangen kann, das nicht auf dem direkten Weg durch die Austrittsöffnung gelangen kann.

In einer Ausführungsvariante kann der am entferntesten zum Leuchtelement liegende Wandabschnitt des Lichtkanals in eine Grenzfläche einer in das Innere des Gehäuses, insbesondere senkrecht, vorspringenden Wand übergehen. Auch diese Wand bewirkt, dass ein Teil des emittierten Lichts reflektiert, insbesondere innerhalb des Lichtkanals und/ oder des Gehäuses mehrfach reflektiert wird und durch die Lichtaustrittsöffnung nach außen gelangen kann. Die vorspringende Wand trennt den Lichtkanal vom übrigen Raumbereich innerhalb des Gehäuses, in welchem beispielsweise andere Bauelemente der Steuerungselektronik angeordnet sind. Der Übergang in die Grenzfläche bzw. die Fläche der vorspringenden Wand kann bündig oder winklig sein. Des Weiteren kann die Wand im Querschnitt eben, V- oder C-förmig sein, wobei sie sich im Falle einer V oder C-Form vorzugsweise zum Leuchtelement hin öffnet.

In einer Ausführungsvariante kann der Lichtkanal durch die Unterseite eines dem Leuchtelement gegenüberliegenden Wandabschnitts begrenzt sein, der derart schräg zum Leuchtelement geneigt ist, dass der Höhenabstand zwischen dem Leuchtelement und der Unterseite mit zunehmender lateraler Entfernung vom Leuchtelement zunimmt.

In einer Ausführungsvariante können die Eintrittsöffnung und die Austrittsöffnung des Lichtkanals bezogen auf eine Projektionsebene senkrecht zum Gehäuse mindestens aneinander angrenzen, vorzugsweise sich überlappen. Dies hat den Vorteil, dass bei einer Herstellung des Gehäuses im Spritzgussverfahren, insbesondere aus Kunststoff, in Richtung senkrecht zur Gehäusewand keine Hinterschneidungen vorliegen, so dass eine einfache Herstellung gewährleistet ist. So kann eine Hälfte der Spritzgießform einen ersten Formabschnitt aufweisen, der einen Teil des Lichtkanals formt, und die andere Hälfte der Spritzgießform einen zweiten Formabschnitt aufweisen, der den restlichen Teil des Lichtkanals formt. Auf einen bewegten Werkzeugkern, der vor dem Öffnen der Werkzeughälften aus dem durch ihn geformten Lichtkanal herausgefahren werden muss, kann somit verzichtet werden. Das Gehäuse, insbesondere der Deckel, kann allerdings auch anders hergestellt werden, beispielsweise in einem additiven Herstellungsverfahren (3D-Druck).

In einer Ausführungsvariante kann ein eintrittsseitiger Umfangskantenabschnitt und/ oder ein austrittsseitiger Umfangskantenabschnitt des Lichtkanals abgeflacht sein. Eine spitze Kante, bei der das Risiko eines Abbrechens besteht und im Spritzgusswerkzeug ohnehin nur schwerlich ausgeformt werden kann, wird somit vermieden.

In einer Ausführungsvariante kann sich der Lichtkanal über einen Teil oder den gesamten lateralen Versatz bis zum Leuchtelement erstrecken. Dabei kann der gesamte Lichtkanal nach oben offen und von der Abdeckung bedeckt sein. Der Lichtkanal ist somit nach oben durch die Abdeckung begrenzt. Die Abdeckung kann in diesem Fall im Bereich des Versatzes bis auf den dem Anzeigeelement zugehörigen Bereich lichtundurchlässig, insbesondere mit einer lichtundurchlässigen Schicht bzw. Beschichtung versehen sein. Beispielsweise bildet der Lichtkanal eine wannenartige Vertiefung in der Außenseite der Gehäusewand, deren Boden zum Leuchtelement hin abfällt und vor dem Leuchtelement endet. Licht des Leuchtelements strahlt somit nach oben gegen die Abdeckung, gelangt jedoch aufgrund der Beschichtung nicht durch die Abdeckung hindurch bzw. nur im Bereich des Anzeigeelements hindurch, welcher frei von der lichtundurchlässigen Schicht bzw. Beschichtung ist.

In einer Ausführungsvariante kann das Gehäuse zwei oder mehr nebeneinanderliegende optische Anzeigeelemente aufweisen. Jedem dieser Anzeigeelemente kann jeweils ein eigenes Leuchtelement zugeordnet sein, das lateral zum jeweiligen Anzeigeelement versetzt innerhalb des Gehäuses angeordnet ist. Es ist allerdings auch möglich, dass zwei oder mehr Anzeigeelementen ein gemeinsames Leuchtelement zugeordnet ist. Ferner ist es ebenfalls möglich, dass zwei oder mehr Leuchtelementen ein einziges Anzeigeelement zugeordnet ist. Vorteilhafterweise ist zwischen jedem Leuchtelement und dem entsprechend zugeordneten Anzeigeelement ein freier Lichtkanal vorgesehen, wie er zuvor beschrieben worden ist.

In der Ausführungsvariante mit nebeneinanderliegenden optische Anzeigeelementen kann das Gehäuse für jedes Anzeigeelement einen freien Lichtkanal aufweisen, durch welchen nur emittiertes Licht des jeweilig zugeordneten Leuchtelements zu dem entsprechenden Anzeigeelement gelangt. Die Lichtkanäle sind jeweils auf das jeweilige Leuchtelement gerichtet. Dabei können die Längsstreckungen der Lichtkanäle zueinander parallel liegen, konvergieren oder divergieren.

Begrenzungswände zwischen benachbarten Lichtkanälen können Streulicht abhalten.

Das Leuchtelement ist besonders bevorzugt eine Leuchtdiode, idealerweise in der SMD-Bauform.

Die Erfindung betrifft auch eine elektromotorisch angetriebene Kreiselpumpe, insbesondere eine Spaltrohrpumpe, die eine Steuerungselektronik der vorbeschriebenen Art aufweist. Vorzugsweise ist diese Steuerungselektronik außen auf das Motorgehäuse, insbesondere auf eine axiale Stirnseite des Motorgehäuses montiert.

Weitere Merkmale, Eigenschaften, Wirkungen und Vorteile der Erfindung werden nachfolgend anhand von Ausführungsbeispielen und der beigefügten Figuren erläutert.

Es sei darauf hingewiesen, dass im Rahmen der vorliegenden Beschreibung die Begriffe "aufweisen", "umfassen" oder "beinhalten" keinesfalls das Vorhandensein weiterer Merkmale ausschließen. Ferner schließt die Verwendung des unbestimmten Artikels bei einem Gegenstand nicht dessen Plural aus. Die Begriffe "über", "übereinander", "oberhalb", "unter", "untereinander", "unterhalb", "lateral" usw. sind stets in Bezug auf die jeweiligen Komponenten zueinander zu verstehen und nehmen keinen Bezug zur Anordnung im Raum.

Die Bezugszeichen behalten von einer zur anderen Figur ihre Bedeutung. Identische Bezugszeichen bezeichnen identische oder zumindest wirkungsgleiche Elemente. Es zeigen:
- Figur 1:: eine Steuerungselektronik nach dem Stand der Technik
- Figur 2 bis 9:: acht verschiedene Ausführungsvarianten erfindungsgemäßer Steuerungseinheiten im Längsschnitt
- Figur 10:: eine Draufsicht der achten Ausführungsvariante gemäß Fig. 9
- Figur 11:: eine schematische Darstellung des erfindungsgemäßen Grundgedankens bei einer Anordnung von drei nebeneinanderliegenden Leuchtdioden
- Figur 12:: eine Ansicht des Gehäuses einer erfindungsgemäßen Ausführungsvariante mit drei nebeneinanderliegenden Leuchtdioden
- Figur 13:: eine Ansicht des Gehäuses gemäß Fig. 12 von außen ohne Abdeckung.

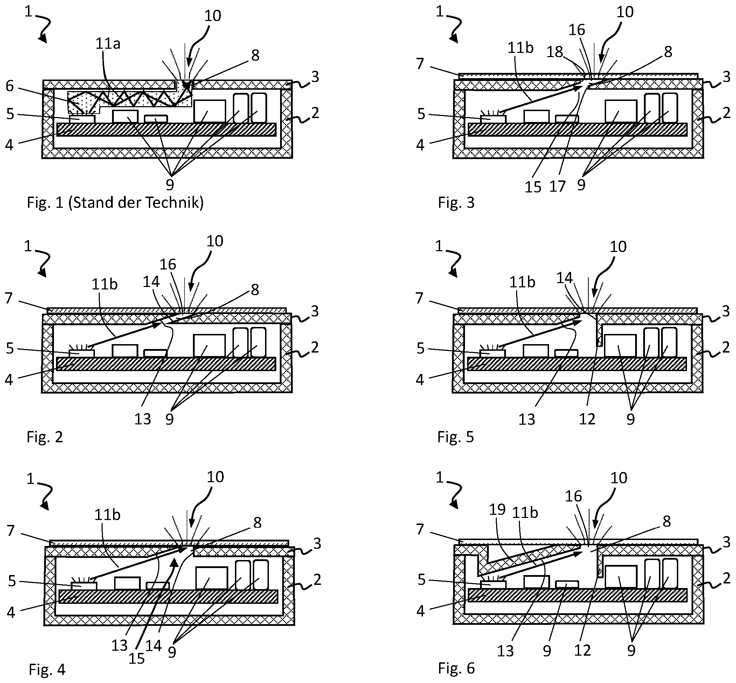

Figur 1 zeigt eine schematische Darstellung einer Steuerungselektronik 1 gemäß dem Stand der Technik. Sie weist ein Gehäuse 2, 3 auf, das hier beispielhaft aus einem wannenförmigen Unterteil 2 und einem das Unterteil 2 abdeckenden Deckel 3 gebildet ist. Im Unterteil 2 sind elektrische und elektronische Bauelemente 9 auf einer gedruckten Leiterplatte 4 angeordnet. Die Bauelemente 9 verleihen der Steuerungselektronik 1 ihre bestimmungsgemäße Funktionalität, wobei sie zur Steuerung und/ oder Regelung einer elektromotorisch angetriebenen Kreiselpumpe, insbesondere einer Spaltrohrpumpe bestimmt ist.

Die Steuerungselektronik 1 weist des Weiteren ein optisches Anzeigeelement 10 auf, das von außerhalb des Gehäuses 2, 3, gesehen werden kann und vorgesehen ist, um eine Betriebsinformation der Steuerungselektronik 1 optisch anzuzeigen. Das Anzeigeelement 10 strahlt Licht ab, das von einem Leuchtelement 5 emittiert wird, welches ebenfalls innerhalb des Gehäuses 2, 3 auf der Leiterplatte 4 angeordnet ist. Das Leuchtelement 5 ist hier in Form einer SMD Leuchtdiode (LED) ausgeführt. Es ist lateral zum Anzeigeelement 10 versetzt angeordnet, wobei zwischen dem Leuchtelement 5 und dem Anzeigeelement 10 ein Lichtwellenleiter 6 liegt.

Der Lichtwellenleiter 6 besitzt ein erstes Ende mit einer Lichteintrittsfläche, die zum Leuchtelement 5 gerichtet ist, ein zweites Ende mit einer dem Anzeigeelement 10 zugeordneten Lichtaustrittsfläche und einen zwischen den Enden liegenden Lichtleitkörper. Vom Leuchtelement 5 emittierte Lichtstrahlen treten durch die Lichteintrittsfläche in den Lichtwellenleiter 6 ein und werden an seinen Innenwänden reflektiert, so dass sie als reflektierte Lichtstrahlen 11a zum zweiten Ende und zur Lichtaustrittsfläche gelangen, wo sie aus dem Lichtwellenleiter 6 austreten. Das zweite Ende des Lichtwellenleiters 6 liegt in einer Öffnung 8 des Gehäuses 2, 3, genauer gesagt im Deckel 3 formschlüssig ein. Aufgrund der Wandstärke des Deckels 3 ist diese Öffnung 8 genauer betrachtet aus einer inneren Öffnung 15 und einer äußeren Öffnung 16 und einem sich dazwischen erstreckenden Kanal 8 gebildet, durch den das vom Leuchtelement 5 emittierte Licht 11a von innerhalb des Gehäuses 2, 3 nach außen gelangt. Somit bildet der Kanal einen dem Leuchtelement 5 zugeordneten Lichtkanal 8.

Figur 2 zeigt eine erste Ausführungsvariante einer erfindungsgemäßen Steuerungselektronik 1 mit lateralem Versatz von Anzeigeelement 10 und Leuchtelement 5, die ohne Lichtwellenleiter auskommt und deshalb einfach und kostengünstig hergestellt werden kann. Zwischen der Austrittsöffnung 16 des Lichtkanals 8 und dem Leuchtelement 5 besteht ein Freiraum. Der Lichtkanal 8 ist auf das Leuchtelement 5 gerichtet, so dass direktes Licht 11b des Leuchtelements 5 durch den Lichtkanal 8 hindurch und aus der Austrittsöffnung 16 nach außen gelangen kann. Die Längserstreckung des Lichtkanals 8 ist somit nicht wie im Stand der Technik rechtwinklig zum Deckel bzw. zur Ebene, in der der Deckel 3 liegt, sondern verläuft schräg hierzu.

Der Lichtkanal 8 wird durch Wandabschnitte begrenzt, von denen in der Querschnittsdarstellung zwei Wandabschnitte 13, 14 gezeigt sind, die sich gegenüber und parallel zu einer Lichtemissionsrichtung 11b des Leuchtelements 5 liegen. Somit gelangt trotz des lateralen Versatzes direktes Licht des Leuchtelements 5 in den Lichtkanal 8 und durch die Austrittsöffnung 16 aus dem Gehäuse 2, 3 heraus, was ohne die gerichtete Erstreckung des Lichtkanals 8 aufgrund der lateralen Versatzes nicht der Fall wäre. Die Querschnittsform des Lichtkanals 8 kann beliebig sein, beispielsweise rund oval, rechteckig oder mehreckig, so dass der Lichtkanal 8 auch quer zur Schnittebene in Figur 2 Wandabschnitte besitzt, die ihn begrenzen. Auch diese Wandabschnitte liegen parallel zu einer Lichtemissionsrichtung des Leuchtelements 5.

Auf der Außenseite des Deckels 3 ist eine Folie 7 angeordnet, die die Austrittsöffnung 16 abdeckt und zumindest im Bereich der Austrittsöffnung 16 das Licht streut. Sie wirkt somit wie eine Streuscheibe.

Figur 3 zeigt eine zweite Ausführungsvariante einer erfindungsgemäßen Steuerungselektronik 1. Sie unterscheidet sich von der ersten Ausführungsvariante darin, dass dort, wo der den Lichtkanal 8 nach oben begrenzende Wandabschnitt 13 die Außenseite des Deckels 3 schneidet, und dort, wo der den Lichtkanal 8 nach unten begrenzende Wandabschnitt 14 die Innenseite des Deckels 3 schneidet, keine spitzen Kanten, sondern Abflachungen 17, 18 vorliegen. Mit anderen Worten sind ein eintrittsseitiger Umfangskantenabschnitt 17 und ein austrittsseitiger Umfangskantenabschnitt 18 des Lichtkanals 8 abgeflacht. Dies vereinfacht die Herstellung, vermeidet Grate und minimiert das Risiko, dass das Gehäuse am Randbereich der Eintrittsöffnung 15 und der Austrittsöffnung 16 einreißt.

Des Weiteren überlappen sich in der zweiten Ausführungsvariante die Eintrittsöffnung 15 und die Austrittsöffnung 16 bezogen auf eine Projektionsebene senkrecht zum Gehäusedeckel 3. Dies trägt ebenfalls zur Vereinfachung der Herstellung bei, wenn das Gehäuse bzw. der Deckel 3 im Spritzgussverfahren hergestellt wird, da in diesem Fall auf bewegte Kerne verzichtet werden und die beiden den Deckel formenden Werkzeughälften des Spritzgusswerkzeugs senkrecht zum Gehäusedeckel 3 von diesem zurückgefahren werden können.

Figur 4 zeigt eine dritte Ausführungsvariante einer erfindungsgemäßen Steuerungselektronik 1. In dieser Variante ist der Lichtkanal 8 durch wenigstens einen sich parallel zu einer Lichtemissionsrichtung 11b des Leuchtelements 5 erstreckenden Wandabschnitt 13 und einen weiteren Wandabschnitt 14 begrenzt, der sich senkrecht zur Ebene, in der der Deckel 3 liegt, d.h. senkrecht zur Außen- und Innenseite des Gehäusedeckels 3 erstreckt. Der senkrechte Wandabschnitt 14 reflektiert einen Teil der Lichtstrahlen in Richtung Austrittsöffnung 16. Des Weiteren ist die Eintrittsöffnung 15 größer als die Austrittsöffnung 16, so dass der Lichtkanal 8 mehr Licht einfängt. Da sich ferner Eintrittsöffnung 15 und Austrittsöffnung 16 vollständig überlappen, ist ebenfalls eine einfache spritzgusstechnische Herstellbarkeit gewährleistet. Auch in dieser Ausführungsvariante können weitere, in der Querschnittsdarstellung nicht sichtbare Wandabschnitte des Lichtkanals 8 parallel zu einer Lichtemissionsrichtung 11b des Leuchtelements 5 liegen.

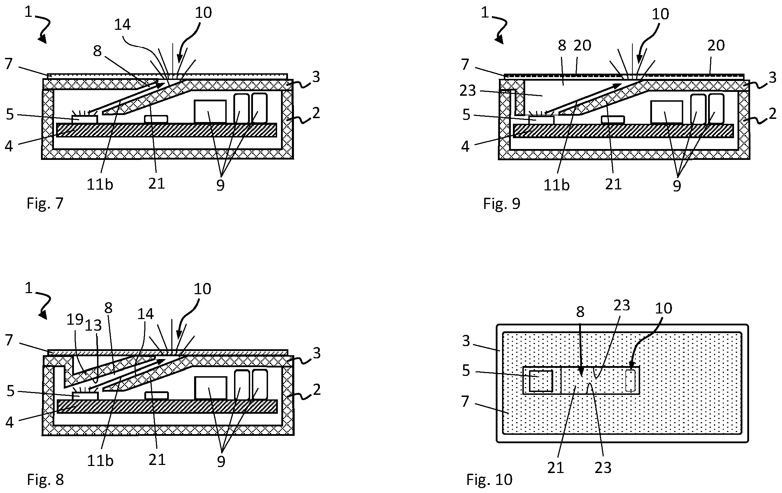

Figur 5 zeigt eine vierte Ausführungsvariante einer erfindungsgemäßen Steuerungselektronik 1. Diese Variante bildet die dritte Ausführungsvariante dahingehend weiter, dass der am entferntesten zum Leuchtelement 5 liegende Wandabschnitt 14 des Lichtkanals 8, der hier allerdings nicht unbedingt senkrecht sein muss (vgl. Fig. 7), in eine Grenzfläche einer in das Innere des Gehäuses 2, 3 vorspringenden Wand 12 übergeht. Diese Wand 12 steht hier senkrecht vom Deckel ab, so dass ein bündiger Übergang vom Wandabschnitt 14 zur Wand 12 vorliegt. Allerdings kann der Übergang auch durch einen Knick oder eine Stufe gebildet sein. Die Wand 12 erhöht den Anteil an Licht, die zur Austrittsöffnung 16 reflektiert wird.

Figur 6 zeigt eine fünfte Ausführungsvariante einer erfindungsgemäßen Steuerungselektronik 1. In dieser Ausführungsvariante erstreckt sich der Lichtkanal 8 über die gesamte Länge des Versatzes, wobei der Deckel 3 einen zum Leuchtelement 5 geneigten Wandabschnitt 19 aufweist, dessen Unterseite 13 den Lichtkanal 8 begrenzt, so dass das Leuchtelement 5 gegen diese Unterseite 13 strahlt. Der Höhenabstand zwischen dem Leuchtelement 5 und der Unterseite 13 des Wandabschnitts 19 nimmt mit zunehmender lateraler Entfernung vom Leuchtelement 5 zu und erreicht bei der Austrittsöffnung 16, bei der der Wandabschnitt 19 endet, ihr Maximum. Dies trägt ebenfalls dazu bei, dass mehr Licht zur Austrittsöffnung 16 gelangt. Zusätzlich geht, wie bei der vierten Ausführungsvariante, der am entferntesten zum Leuchtelement 5 liegende Wandabschnitt 14 des Lichtkanals 8 in die Grenzfläche einer in das Innere des Gehäuses 2, 3 vorspringenden Wand 12 über.

Figur 7 zeigt eine sechste Ausführungsvariante einer erfindungsgemäßen Steuerungselektronik 1, bei der der am entferntesten zum Leuchtelement 5 liegende Wandabschnitt 14 des Lichtkanals 8 ebenfalls in die Grenzfläche einer in das Innere des Gehäuses 2, 3 vorspringenden Wand 21 übergeht, wobei hier jedoch der besagte Wandabschnitt 14 nicht wie in der vierten Ausführungsvariante senkrecht zur Ebene liegt, in der sich der Deckel 3 erstreckt, sondern im Wesentlichen parallel zu einer direkten Lichtemissionsrichtung 11b liegt, wie in der ersten und zweiten Ausführungsvariante. Die besagte Wand 21 erstreckt sich hier ebenfalls parallel zu einer direkten Lichtemissionsrichtung 11b und endet vor dem Leuchtelement 5. Der Wandabschnitt 14 geht somit bündig in die Grenzfläche der Wand 21 über. Es kann jedoch auch stufenartiger Übergang realisiert werden.

Figur 8 zeigt eine siebte Ausführungsvariante einer erfindungsgemäßen Steuerungselektronik 1, in der Elemente der fünften und sechsten Ausführungsvariante kombiniert sind. So ist einerseits die nach innen vorspringende Wand 21 der sechsten Ausführungsvariante übernommen, die sich von der Austrittsöffnung 16 zum Leuchtelement 5 im Wesentlichen parallel zu einer Lichtemissionsrichtung 11b erstreckt und den Lichtkanal 8 nach unten begrenzt. Ferner ist der zum Leuchtelement 5 geneigte Wandabschnitt 19 des Deckels 3 der fünften Ausführungsvariante übernommen, der sich ebenfalls von der Austrittsöffnung 16 zum Leuchtelement 5 im Wesentlichen parallel zu einer Lichtemissionsrichtung 11b erstreckt und dessen Unterseite 13 den Lichtkanal 8 begrenzt. Somit erstreckt sich der Lichtkanal 8 im Gehäuse 2, 3 tunnelartig über die gesamte Länge des Versatzes von der Austrittsöffnung 16 schräg zum Leuchtelement 5. Ferner sind auch in dieser Ausführungsvariante die eintritts- und austrittsseitigen Umfangskanten abgeflacht.

Figur 9 und 10 zeigen eine achte Ausführungsvariante einer erfindungsgemäßen Steuerungselektronik 1, wobei Figur 9 einen Längsschnitt analog zu den übrigen Ausführungsvarianten, und Figur 10 eine Draufsicht zeigt. Die achte Ausführungsvariante unterscheidet sich von der siebten Ausführungsvariante darin, dass der Wandabschnitt 19 des Deckels 3 entfallen ist. Der Lichtkanal 8 erstreckt sich somit ebenfalls über den gesamten lateralen Versatz bis zum Leuchtelement 5, ist jedoch nach oben hin nicht durch einen Abschnitt des Gehäuses 2, 3 begrenzt, nach unten allerdings wieder durch die vom Deckel vorspringende Wand 21. Vielmehr deckt die Abdeckung 7 den gesamten Lichtkanal 8 ab, so dass das Leuchtelement 5 gegen die Abdeckung 7 strahlt. Im Bereich des Versatzes, bis auf den dem Anzeigeelement 10 zugehörigen Bereich, ist die Abdeckung 7 lichtundurchlässig, so dass nur das Anzeigeelement 10 Licht abstrahlt. Hierzu ist eine lichtundurchlässige Schicht 20 auf die Unter- und/ oder Oberseite der Abdeckung 7 aufgetragen. Somit gelangt sowohl direktes Licht 11a als auch reflektiertes Licht zum lichtdurchlässigen Bereich und wird dort durch die Abdeckung 7 gestreut.

Figur 10 zeigt eine Draufsicht auf den Deckel 3 wobei die Kontur des darunterliegenden Lichtkanals 8 und des Leuchtelements 5 dargestellt sind. Wie Figur 10 ferner zu erkennen gibt, ist die Abdeckung 7 etwas kleiner als der Deckel 3. Am Ort des Anzeigeelements 10 ist die Abdeckung lichtdurchlässig, im Übrigen lichtundurchlässig. Neben der Längserstreckung des Lichtkanals 8 vom Anzeigeelement 8 zum Leuchtelement 5 hat der Lichtkanal 8 auch eine Erstreckung in der Breite, wobei er durch zwei seitliche Begrenzungswände 23 begrenzt wird. Insgesamt besitzt der Lichtkanal 8 somit eine rechteckige Gestalt. Der durch die Wand 21 gebildete Boden des Lichtkanals 8 hebt sich mit zunehmender Entfernung zum Leuchtelement 5 an.

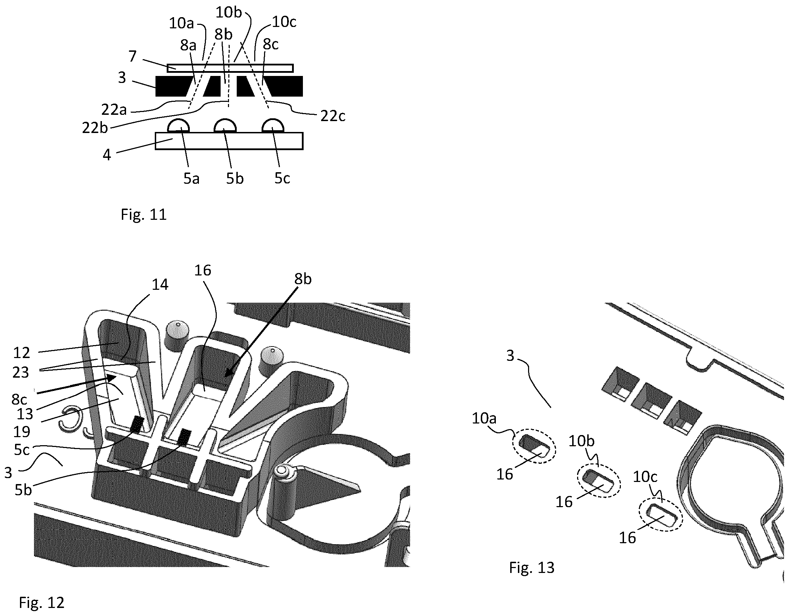

Das erfindungsgemäße Prinzip der Ausrichtung des Lichtkanals 8 auf das Leuchtelement 5 ist natürlich nicht auf die Verwendung bei einem einzigen Leuchtelement 5 beschränkt. Figur 11 zeigt beispielhaft drei nebeneinander auf einer Leiterplatte 4 angeordnete Leuchtelemente 5a, 5b, 5b in Gestalt von LEDs, die innerhalb des Gehäuses 2, 3 angeordnet sind, wobei von dem Gehäuse nur der Deckel 3 gezeigt ist. Von außen betrachtet, weist das Gehäuse 2, 3 bzw. der Deckel 3 drei nebeneinanderliegende optische Anzeigeelemente 10a, 10b, 10c auf, wobei jedem der Anzeigeelemente 10a, 10b, 10c jeweils eines der Leuchtelemente 5a, 5b, 5c zugeordnet ist. Die beiden äußeren Leuchtelemente 5a, 5c sind lateral zum jeweiligen Anzeigeelement 10a, 10c versetzt. Das Gehäuse 2, 3, genauer gesagt der Deckel 3, weist für jedes Anzeigeelement 10a, 10b, 10c einen freien Lichtkanal 8a, 8b, 8c auf, durch welchen nur direkt emittiertes Licht des jeweilig zugeordneten Leuchtelements 5 zu dem entsprechenden Anzeigeelemente 10a, 10b, 10c gelangt. Hierzu sind die Lichtkanäle 8a, 8b, 8c jeweils auf das jeweilige Leuchtelement 5a, 5b, 5c gerichtet. D.h., dass die jeweilige Mittellängsachse 22a, 22b, 22c in einer Flucht mit dem entsprechenden Leuchtelement 5a, 5b, 5c liegt. Licht der anderen Leuchtelemente 5a, 5b, 5c kann dagegen nicht direkt durch die entsprechend anderen Lichtkanäle hindurch. In der Ausführungsvariante nach Fig. 11 konvergieren die Mittellängsachsen bzw. Längsstreckungen 22a, 22b, 22c der Lichtkanäle 8a, 8b, 8c zueinander außerhalb des Gehäuses 2, 3. Eine Streuscheibe 7 deckt die Lichtkanäle 8a, 8b, 8c außen ab.

Die Grundidee der Erfindung bei zwei oder mehr Anzeigeelementen besteht somit darin, Öffnungen im Gehäuse derart vorzusehen, dass nur direktes Licht des entsprechend zugeordneten Leuchtelements durch diese Öffnungen hindurchtreten kann. Dies wird durch eine besondere Orientierung der Öffnungen bewirkt, die die Transmission von Licht aus einer Richtung zulässt, aus einer anderen Richtung dagegen nicht ermöglicht. Da die Öffnungen eine Orientierung besitzen, werden sie im Sinne der Erfindung als Lichtkanäle betrachtet.

Figuren 12 und 13 zeigen in perspektivischer Ansicht den Deckel 3 einer konkreten Ausführungsvariante mit drei optischen Anzeigeelementen 10a, 10b, 10c, wobei Figur 12 eine Ansicht von unten und Figur 13 eine Ansicht von oben zeigt. Die entsprechenden Leuchtelemente 5a, 5b, 5c sind hier nur angedeutet. Die Lichtkanäle 8a, 8b, 8c entsprechen in ihrer Ausführung im Wesentlichen der siebten Ausführungsvariante nach Fig. 6, wobei allerdings rückseitig des zum Leuchtelement 5a, 5b, 5c geneigten Wandabschnitts 19, auf dessen Unterseite 13 man in Figur 12 blickt, keine Vertiefung wie in Figur 6 vorhanden ist. Der Deckel 3 ist hier vielmehr massiv und außen eben ausgeführt, wie Figur 13 zeigt.

Quer zur Längserstreckung sind die Lichtkanäle 8a, 8b, 8c beidseits jeweils von einer Seitenwand 23 begrenzt. Die Seitenwände 23 verhindern, dass Streulicht eines Leuchtelements 5a, 5b, 5c in einen benachbarten Lichtkanal gelangt. Des Weiteren wird jeder Lichtkanal 8a, 8b, 8c an einem stirnseitigen Ende durch eine vom Deckel 3 senkrecht vorspringende Wand 12 begrenzt. Der am entferntesten zum entsprechenden Leuchtelement 5a, 5b, 5c liegende Wandabschnitt 14 des jeweiligen Lichtkanals 8 geht bündig in die Grenzfläche dieser Wand 12 über. Ferner gehen die Seitenwände 23 eines Lichtkanals 8a, 8b, 8c in die vorspringende Wand 12 über und bilden somit gemeinsam mit dieser einen Rahmen. Die Leuchtelemente 5a, 5b, 5c sind auf der Leiterplatte näher beieinander angeordnet, als die Anzeigeelemente 10a, 10b, 10c an dem Gehäuse, so dass die Lichtkanäle 8a, 8b, 8c in ihrer Längserstreckung aus Sicht der Leuchtelemente 5a, 5b, 5c divergieren.

Insgesamt erlaubt diese einfache konstruktive Gestaltung des Gehäuses 2, 3, insbesondere des Deckels 3, das emittiertes Licht eines Leuchtelements 5, z.B. einer Leuchtdiode, direkt, d.h. reflexionsfrei, zu einem lateral versetzt hierzu angeordneten Anzeigeelement 10 gelangt, insbesondere emittiertes oder reflektiertes Licht eines benachbarten Leuchtelements von diesem Anzeigeelement 10 zurückgehalten wird, ohne einen Lichtwellenleiter zu verwenden, um das Licht zum Anzeigeelement zu leiten. Die Herstellung einer diese konstruktive Ausgestaltung verwendenden Steuerungselektronik ist deshalb besonders einfach und preiswert.

Es sei darauf hingewiesen, dass die vorstehende Beschreibung lediglich beispielhaft zum Zwecke der Veranschaulichung gegeben ist und den Schutzbereich der Erfindung keineswegs einschränkt. Merkmale der Erfindung, die als "kann", "beispielhaft", "bevorzugt", "optional", "ideal", "vorteilhaft", "gegebenenfalls" oder "geeignet" angegeben sind, sind als rein fakultativ zu betrachten und schränken ebenfalls den Schutzbereich nicht ein, welcher ausschließlich durch die Ansprüche festgelegt ist. Soweit in der vorstehenden Beschreibung Elemente, Komponenten, Verfahrensschritte, Werte oder Informationen genannt sind, die bekannte, naheliegende oder vorhersehbare Äquivalente besitzen, werden diese Äquivalente von der Erfindung mit umfasst. Ebenso schließt die Erfindung jegliche Änderungen, Abwandlungen oder Modifikationen von Ausführungsbeispielen ein, die den Austausch, die Hinzunahme, die Änderung oder das Weglassen von Elementen, Komponenten, Verfahrensschritte, Werten oder Informationen zum Gegenstand haben, solange der erfindungsgemäße Grundgedanke erhalten bleibt, ungeachtet dessen, ob die Änderung, Abwandlung oder Modifikationen zu einer Verbesserung oder Verschlechterung einer Ausführungsform führt.

Obgleich die vorstehende Erfindungsbeschreibung eine Vielzahl körperlicher, unkörperlicher oder verfahrensgegenständlicher Merkmale in Bezug zu einem oder mehreren konkreten Ausführungsbeispiel(en) nennt, so können diese Merkmale auch isoliert von dem konkreten Ausführungsbeispiel verwendet werden, jedenfalls soweit sie nicht das zwingende Vorhandensein weiterer Merkmale erfordern. Umgekehrt können diese in Bezug zu einem oder mehreren konkreten Ausführungsbeispiel(en) genannten Merkmale beliebig miteinander sowie mit weiteren offenbarten oder nicht offenbarten Merkmalen von gezeigten oder nicht gezeigten Ausführungsbeispielen kombiniert werden, jedenfalls soweit sich die Merkmale nicht gegenseitig ausschließen oder zu technischen Unvereinbarkeiten führen.

## Patentansprüche

1. Steuerungselektronik (1) für eine elektromotorisch angetriebene Kreiselpumpe, insbesondere eine Spaltrohrpumpe, mit einem Gehäuse (2, 3), innerhalb dem ein Leuchtelement (5) angeordnet ist, wobei das Gehäuse (2, 3) einen dem Leuchtelement (5) zugeordneten Lichtkanal (8) mit einer Lichtaustrittsöffnung (16) zur Bildung eines optischen Anzeigeelements (10) aufweist, das lateral zum Leuchtelement (5) versetzt ist und emittiertes Licht (11) des Leuchtelements (5) abgibt, **dadurch gekennzeichnet, dass** zwischen der Austrittsöffnung (16) und dem Leuchtelement (5) ein Freiraum besteht und der Lichtkanal (8) auf das Leuchtelement (5) gerichtet ist.

2. Steuerungselektronik (1) nach Anspruch 1, **dadurch gekennzeichnet, dass** das Leuchtelement (5) auf einer Leiterplatte (4) angeordnet ist.

3. Steuerungselektronik (1) nach Anspruch 1 oder 2, **dadurch gekennzeichnet, dass** der Lichtkanal (8) in einem ein Gehäuseunterteil (2) abdeckenden Deckel (3) ausgebildet ist.

4. Steuerungselektronik (1) nach einem der vorherigen Ansprüche, **dadurch gekennzeichnet, dass** der Lichtkanal (8) durch eine Abdeckung (7) abgedeckt ist, die zumindest im Bereich des Anzeigeelements (10) derart beschaffen ist, dass sie das Licht streut.

5. Steuerungselektronik (1) nach Anspruch 4, **dadurch gekennzeichnet, dass** die Abdeckung (7) eine Folie oder Platte ist.

6. Steuerungselektronik (1) nach einem der vorherigen Ansprüche, **dadurch gekennzeichnet, dass** der Lichtkanal (8) wenigstens zwei sich gegenüberliegende Wandabschnitte (13, 14) aufweist, die jeweils parallel zu einer Lichtemissionsrichtung (11b) des Leuchtelements (5) liegen.

7. Steuerungselektronik (1) nach einem der Ansprüche 1 bis 5, **dadurch gekennzeichnet, dass** der Lichtkanal (8) wenigstens einen sich parallel zu einer Lichtemissionsrichtung (11b) des Leuchtelements (5) erstreckenden Wandabschnitt (13) und einen weiteren Wandabschnitt (14) aufweist, der sich senkrecht zur Außen- oder Innenseite des Gehäuses (2, 3) erstreckt.

8. Steuerungselektronik (1) nach einem der vorherigen Ansprüche, **dadurch gekennzeichnet, dass** der am entferntesten zum Leuchtelement (5) liegende Wandabschnitt (14) des Lichtkanals (8) in eine Grenzfläche einer in das Innere des Gehäuses (2, 3), insbesondere senkrecht, vorspringenden Wand (12, 21) übergeht.

9. Steuerungselektronik (1) nach einem der vorherigen Ansprüche, **dadurch gekennzeichnet, dass** der Lichtkanal (8) durch die Unterseite (13) eines dem Leuchtelement (5) gegenüberliegenden Wandabschnitts (19) begrenzt ist, der derart schräg zum Leuchtelement (5) geneigt ist, dass der Höhenabstand zwischen dem Leuchtelement (5) und der Unterseite (13) mit zunehmender lateraler Entfernung vom Leuchtelement (5) zunimmt.

10. Steuerungselektronik (1) nach einem der vorherigen Ansprüche, **dadurch gekennzeichnet, dass** die Eintrittsöffnung (15) und die Austrittsöffnung (16) des Lichtkanals (8) bezogen auf eine Projektionsebene senkrecht zum Gehäuse (3) mindestens aneinander angrenzen, vorzugsweise sich überlappen.

11. Steuerungselektronik (1) nach einem der vorherigen Ansprüche, **dadurch gekennzeichnet, dass** ein eintrittsseitiger Umfangskantenabschnitt (17) und/ oder austrittsseitiger Umfangskantenabschnitt (18) des Lichtkanals (8) abgeflacht ist.

12. Steuerungselektronik (1) zumindest nach Anspruch 4 oder 5, **dadurch gekennzeichnet, dass** sich der Lichtkanal (8) über einen Teil oder den gesamten lateralen Versatz bis zum Leuchtelement (5) erstreckt und die Abdeckung (7) im Bereich des Versatzes bis auf den dem Anzeigeelement (10) zugehörigen Bereich lichtundurchlässig ist, insbesondere mit einer lichtundurchlässigen Schicht (20) versehen ist.

13. Steuerungselektronik (1) nach einem der vorherigen Ansprüche, **dadurch gekennzeichnet, dass** das Gehäuse (2, 3) zwei oder mehr nebeneinanderliegende optische Anzeigeelemente (10a, 10b, 10c) aufweist, wobei jedem der Anzeigeelemente (10a, 10b, 10c) jeweils ein Leuchtelement (5a, 5b, 5c) zugeordnet ist, das lateral zum jeweiligen Anzeigeelement (10a, 10b, 10c) versetzt innerhalb des Gehäuses (2, 3) angeordnet ist, und dass das Gehäuse (2, 3) für jedes Anzeigeelement (10a, 10b, 10c) einen freien Lichtkanal (8a, 8b, 8c) aufweist, durch welchen nur emittiertes Licht (11) des jeweilig zugeordneten Leuchtelements (5) zu dem entsprechenden Anzeigeelemente (10a, 10b, 10c) gelangt, wobei die Lichtkanäle (8a, 8b, 8c) jeweils auf das jeweilige Leuchtelement (5) gerichtet sind und die Längsstreckungen (22a, 22b, 22c) der Lichtkanäle (8a, 8b, 8c) zueinander konvergieren oder divergieren.

14. Steuerungselektronik (1) nach einem der vorherigen Ansprüche, **dadurch gekennzeichnet, dass** das zumindest eine Leuchtelement (5) eine Leuchtdiode, insbesondere in SMD-Technik ist.

## Claims

1. Control electronics (1) for an electric motor driven rotary pump, notably a canned motor pump, with a casing (2, 3) in which a luminous element (5) is arranged, in which the casing (2, 3) has a light channel (8) that is assigned to the luminous element (5) and that has a light emission aperture (16) forming an optical display element (10) that is offset laterally to the luminous element (5) and emits light (11) emitted by the luminous element (5), **characterised by** a clearance between the emission aperture (16) and the luminous element (5) and by the light channel (8) being directed to the luminous element (5).

2. Control electronics (1) according to claim 1, **characterised by** the luminous element (5) being arranged on a PCB (4).

3. Control electronics (1) according to claim 1 or 2, **characterised by** the light channel (8) being formed in a cover (3) that covers a lower casing section (2).

4. Control electronics (1) according to one of the preceding claims, **characterised by** the light channel (8) being covered by a cover (7) with light scattering properties, at least in the area of the display element (10).

5. Control electronics (1) according to claim 4, **characterised by** the cover (7) being a foil or plate.

6. Control electronics (1) according to one of the preceding claims, **characterised by** the light channel (8) having at least two wall sections (13, 14) opposite each other that are respectively parallel to a light emission direction (11b) of the luminous element (5).

7. Control electronics (1) according to one of the claims 1 through 5, **characterised by** the light channel (8) having at least one wall section (13) extending parallel to a light emission direction (11b) of the luminous element (5) and another wall section (14) extending perpendicular to the outer or inner side of the casing (2, 3).

8. Control electronics (1) according to one of the preceding claims, **characterised by** the wall section (14) of the light channel (8) that is farthest away from the luminous element (5) merging with a bounding surface of a wall (12, 21) protruding, in particular vertically, into the interior of the casing (2, 3).

9. Control electronics (1) according to one of the preceding claims, **characterised by** the light channel (8) being terminated by the underside (13) of a wall section (19) opposite the luminous element (5), which is tilted at an angle relative to the luminous element (5) so that the vertical distance between the luminous element (5) and the underside (13) increases along with the lateral distance from the luminous element (5).

10. Control electronics (1) according to one of the preceding claims, **characterised by** the inlet aperture (15) and the outlet aperture (16) of the light channel (8) at least adjoining and preferably overlapping in reference to a projection plane perpendicular to the casing (3).

11. Control electronics (1) according to one of the preceding claims, **characterised by** a section of the circumferential edge on the inlet side (17) and/or a section of the circumferential edge on the outlet side (18) of the light channel (8) being flattened.

12. Control electronics (1) at least according to claim 4 or 5, **characterised by** the light channel (8) extending over part or the entire lateral offset to the luminous element (5) and by the cover (7) in the area of the offset being opaque except for the area corresponding to the display element (10), notably with the application of an opaque layer (20).

13. Control electronics (1) according to one of the preceding claims, **characterised by** the casing (2, 3) having two or more adjacent optical display elements (10a, 10b, 10c), in which a luminous element (5a, 5b, 5c) is respectively assigned to each display element (10a, 10b, 10c), arranged laterally offset to the respective display element (10a, 10b, 10c) within the casing (2, 3), and the casing (2, 3) having a free light channel (8a, 8b, 8c) for each display element (10a, 10b, 10c), through which only emitted light (11) of the respective assigned luminous element (5) reaches the corresponding display element (10a, 10b, 10c), in which the light channels (8a, 8b, 8c) are respectively aligned with the corresponding luminous element (5) and the longitudinal axes (22a, 22b, 22c) of the light channels (8a, 8b, 8c) converge or diverge.

14. Control electronics (1) according to one of the preceding claims, **characterised by** at least one luminous element (5) being a light emitting diode, notably using the SMD technology.

## Revendications

1. Électronique de commande (1) pour une pompe centrifuge à moteur électrique, en particulier une pompe à gaine, équipée d'un boîtier (2, 3) contenant un élément lumineux (5), ce boîtier (2, 3) présentant un canal lumineux (8) associé à l'élément lumineux (5) avec un orifice de sortie de la lumière (16) pour former un élément d'affichage optique (10) décalé latéralement par rapport à l'élément lumineux (5) et rendant la lumière émise (11) par l'élément lumineux (5), **caractérisée en ce qu'**il y a un espace libre entre l'ouverture de sortie (16) et l'élément lumineux (5) et que le canal lumineux (8) est dirigé vers l'élément lumineux (5).

2. Électronique de commande (1) selon la revendication 1, **caractérisée en ce que** l'élément lumineux (5) est disposé sur un circuit imprimé (4).

3. Électronique de commande (1) selon la revendication 1 ou 2, **caractérisée en ce que** le canal lumineux (8) est formé dans un couvercle (3) couvrant une partie inférieure du boîtier (2).

4. Électronique de commande (1), selon l'une des revendications précédentes, **caractérisée en ce que** le canal lumineux (8) est couvert par un couvercle (7) conçu, au moins dans la zone de l'élément d'affichage (10), de telle façon qu'il diffuse la lumière.

5. Électronique de commande (1) selon la revendication 4, **caractérisée en ce que** le couvercle (7) est une plaque ou un film.

6. Électronique de commande (1) selon l'une des revendications précédentes, **caractérisée en ce que** le canal lumineux (8) présente au moins deux sections de paroi opposées (13, 14) disposées parallèlement à un sens d'émission de la lumière (11b) de l'élément lumineux (5).

7. Électronique de commande (1) selon l'une des revendications 1 à 5, **caractérisée en ce que** le canal lumineux (8) présente au moins une section de paroi (13) s'étendant parallèlement à un sens d'émission de la lumière (11b) de l'élément lumineux (5) et un autre section de paroi (14) s'étendant verticalement par rapport à la face intérieure ou extérieure du boîtier (2, 3).

8. Électronique de commande (1) selon l'une des revendications précédentes, **caractérisée en ce que** la section de paroi(14) du canal lumineux (8) la plus éloignée de l'élément lumineux (5) devient une surface limite d'une paroi (12, 21) en saillie, notamment verticalement, à l'intérieur du boîtier (2, 3).

9. Électronique de commande (1) selon l'une des revendications précédentes, **caractérisée en ce que** le canal lumineux (8) est limité par la face inférieure (13) d'une section de paroi (19) disposée en face de l'élément lumineux (5) et qui est incliné de telle manière par rapport à l'élément lumineux (5) que la distance en hauteur entre l'élément lumineux (5) et la face inférieure (13) augmente avec l'éloignement latéral de l'élément lumineux (5).

10. Électronique de commande (1) selon l'une des revendications précédentes, **caractérisée en ce que** l'ouverture d'entrée (15) et l'ouverture de sortie (16) du canal lumineux (8) sont au moins adjacentes, de préférence se chevauchent, par rapport à un plan de projection perpendiculaire au boîtier (3).

11. Électronique de commande (1) selon l'une des revendications précédentes, **caractérisée en ce qu'une** section de bord périphérique côté entrée (17) et/ou une section de bord périphérique côté sortie (18) du canal lumineux (8) est aplatie.

12. Électronique de commande (1) au moins selon la revendication 4 ou 5, **caractérisée en ce que** le canal lumineux (8) s'étend sur une partie ou sur la totalité du décalage latéral jusqu'à l'élément lumineux (5) et le couvercle (7) dans la zone du décalage jusqu'à la zone associée à l'élément d'affichage (10) est imperméable à la lumière, plus particulièrement est revêtu d'une couche imperméable à la lumière (20).

13. Électronique de commande (1) selon l'une des revendications précédentes, **caractérisée en ce que** le boîtier (2, 3) comporte au moins deux éléments d'affichage optiques juxtaposés (10a, 10b, 10c), chacun des éléments d'affichage (10a, 10b, 10c) étant affecté à un élément lumineux (5a, 5b, 5c) décalé dans le boîtier (2, 3) latéralement par rapport à son élément d'affichage (10a, 10b, 10c) associé, et que le boîtier (2, 3) présente pour chaque élément d'affichage (10a, 10b, 10c), un canal lumineux libre (8a, 8b, 8c) au travers duquel seule la lumière émise (11) de l'élément lumineux associé (5) pénètre dans l'élément d'affichage correspondant (10a, 10b, 10c), sachant que les canaux lumineux (8a, 8b, 8c) sont orientés vers l'élément lumineux correspondant (5) et les distances longitudinales (22a, 22b, 22c) des canaux lumineux (8a, 8b, 8c) convergent ou divergent.

14. Électronique de commande (1) selon l'une des revendications précédentes, **caractérisée en ce que** qu'au moins un élément lumineux (5) est une diode électroluminescente, en particulier de technologie SMD.
